# EUROPÄISCHE PATENTSCHRIFT

(11) **EP 1 181 478 B1**
(45) Veröffentlichungstag und Bekanntmachung des Hinweises auf die Patenterteilung: **22.10.2003**
(21) Anmeldenummer: 00920481.9
(22) Anmeldetag: 08.03.2000
(51) Int. Cl.: F16L 23/032

(54) **LOSFLANSCH ZUR VERBINDUNG VON ROHREN UND VERFAHREN ZUR HERSTELLUNG EINES LOSFLANSCHES**
LAPPED FLANGE FOR CONNECTING PIPES AND METHOD FOR PRODUCING SUCH A LAPPED FLANGE
BRIDE LIBRE POUR LE RACCORDEMENT DE TUYAUX ET PROCEDE DE FABRICATION D'UNE BRIDE LIBRE

(30) Priorität: 08.06.1999 DE 19925956; 01.03.2000 DE 10010698
(43) Veröffentlichungstag der Anmeldung: 27.02.2002
(73) Patentinhaber: Georg Fischer Rohrleitungssysteme AG, 8201 Schaffhausen (CH)
(72) Erfinder: SCHÜRMANN, Erich, D-48324 Sendenhorst (DE); DÖRING, Ernst, D-52076 Aachen (DE)
(74) Vertreter: Weiss, Wolfgang, Dr.
(86) Internationale Anmeldenummer: EP0001999
(87) Internationale Veröffentlichungsnummer: WO00075549

(56) Entgegenhaltungen:
- EP-A- 0 315 723
- GB-A- 2 200 179
- US-A- 4 105 227

## Beschreibung

Die Erfindung betrifft einen Losflansch zur Verbindung von Rohren an mit jeweils einem Bund versehenen gegenüberliegenden Rohrenden, mit einem ringförmigen Flanschkörper, der eine Mehrzahl von in Umfangsrichtung verteilt angeordneten äusseren Durchgangsöffnungen für Befestigungsmittel aufweist, wobei der Flanschkörper einen inneren Ringabschnitt und einen äusseren Ringabschnitt aufweist.

Ferner betrifft die Erfindung ein Verfahren zur Herstellung eines Losflansches für eine Rohrverbindung, der eine Mehrzahl von in Umfangsrichtung verteilt angeordneten äusseren Durchgangsöffnungen aufweist.

Es ist zum Beispiel aus GB-A-2 200 179 oder aus US-A-4 105 227 bekannt, zur dichtenden Verbindung von Rohren kreisringförmige Flansche mit verteilt angeordneten Durchgangsöffnungen im Bereich von Rohrenden einzusetzen. Die Flansche werden als Losflansche jeweils an einen umlaufenden Bund des Rohrendes angelegt und mittels durch die in Umfangsrichtung verteilt angeordneten Durchgangsöffnungen geführten Schraubbolzen in Verbindung mit an freien Enden derselben aufgesetzten Muttern verspannt, so dass eine feste und abdichtende Verbindung zwischen den Rohrenden beider Rohre gegeben ist. Dabei liegen die Losflansche jeweils auf einer dem gegenüberliegenden Rohrende abgewandten Seite des Bundes eines Rohrendes an demselben an.

Da die axialen Verspannkräfte in radialer Richtung nach aussen von den Bunden anliegen, kann es passieren, dass sich die Losflansche in einem äusseren Bereich aufeinander zu bewegen und somit bleibend verformt werden. Die Flansche weisen dann eine unerwünschte kegelstumpfförmige Formgebung auf. Beim Verspannen einer solchen Rohrleitungsflanschverbindung durch das Anziehen der Schraubbolzen werden die Dichtung und die Bunde gestaucht, die Flansche gestülpt und die Schrauben gedehnt.

Insbesondere bei der Anwendung von Losflanschen bei Rohrleitungen aus Kunststoff ist ein Kriechen der kraftführenden Elemente, die Bunde, die Dichtung und insbesondere die Losflansche, nicht zu vermeiden, so dass ein Nachlassen der Dichtkräfte eintritt. Die Spannbolzen bzw. Spannschrauben können mit ihrer geringen Dehnung das Kriechen der Kunststoffteile üblicherweise nicht kompensieren. Zwar könnten axialelastische Losflansche das Kriechen kompensieren. Ein solcher wünschenswert weicher Flansch hätte jedoch den oben erwähnten prinzipiellen Nachteil, dass der Flansch bei mechanischer Belastung sich entsprechend seiner geringen axialen Steifigkeit stark axial verformen bzw. stülpen würde. Somit wird der Effekt der damit einhergehenden kegeligen Verformung der Flansche verstärkt, was ein Kippen der Auflageflächen für die Schrauben und somit eine unerwünschte exzentrische Belastung der Schrauben zur Folge hätte.

Aufgabe der vorliegenden Erfindung ist es daher, einen Losflansch für eine Rohrverbindung derart weiterzubilden, dass eine definierte axiale Federsteifigkeit und Verformbarkeit gewährleistet ist, ohne dass sich die Schraubenauflageflächen nachteilig neigen und die Schrauben dadurch exzentrisch belastet werden.

Zur Lösung dieser Aufgabe ist der erfindungsgemässe Losflansch in Verbindung mit dem Oberbegriff des Patentanspruchs 1 dadurch gekennzeichnet, dass eine radial nach innen zugewandte Innenseite des inneren Ringabschnitts zumindest bereichsweise eine in Umfangsrichtung verlaufende Nut mit einer vorgegebenen Tiefe aufweist.

Der besondere Vorteil des erfindungsgemässen Losflansches besteht darin, dass eine definierte axiale Steifigkeit gewährleistet wird durch das Vorsehen einer Nut in einem inneren Ringabschnitt des Flanschkörpers. Die Nut ermöglicht eine gezielte elastische Verformbarkeit des Losflansches in einem radial inneren Bereich desselben. Die axiale Steifigkeit des Losflansches nimmt dabei von einem äusseren zu einem inneren Bereich desselben hin ab, so dass ein zusätzliches Befestigungsmittel, nämlich ein Spannbolzen mit einem Kopf bzw. einer Schraube, stets in einer vorgegebenen flächigen Anlage an dem Losflansch gehalten ist.

Vorteilhaft kann verhindert werden, dass ein unerwünschtes "Schüsseln" des Flanschkörpers bzw. Kippen des ausseren Ringabschnittes infolge eines zu grossen Anzugsdrehmomentes eintritt. Ein ungleichmässiges Aufliegen der Enden des Befestigungsmittels, insbesondere einer Mutter und eines Schraubenkopfes, an Radialflachen des Flanschkörpers kann dadurch sicher vermieden werden.

Nach einer bevorzugten Ausfuhrungsform des Losflansches ist die Nut V-förmig ausgebildet, die durchgehend in Umfangsrichtung verläuft. Die Kontur der die Nut bildenden Schragflachen kann dabei eben oder gewölbt ausgebildet sein. Die Form der Nut ist abhängig von der gewünschten Verformungscharakteristik des inneren Ringabschnitts. Die Form der Nut ist abhängig von der Geometrie des Losflansches und/oder von der vorgegebenen Sollspannkraft der Flanschverbindung.

Die Nut ist in Verbindung mit einer zu dem Bund zugekehrten Radialfläche der Flanschteile eines Flanschkörpers derart geformt, dass bei Nennbelastung des Flansches die sich einstellende Stülpung bzw. ein Kippen des äusseren Ringabschnitts kompensiert wird, wobei die Radialfläche des Flanschkörpers flächig an dem Bund anliegt unter Bildung einer relativ geringen Flächenpressung.

Nach einer Weiterbildung des Losflansches sind an einer Innenseite des inneren Ringabschnitts in Umfangsrichtung verteilt und radial mehrere nach innen ragende Nocken angeordnet, mittels derer der Losflansch an dem Rohrende klemmend gehalten ist. Hierdurch kann der Losflansch zur Durchführung der Montage an dem Rohr fixiert werden.

Nach einer Weiterbildung des Losflansches weisen die Flanschteile an einer zu der Schrägfläche gegenüberliegenden Seite Radialflächen mit einer prismenförmigen Oberflächenstruktur auf, die sich beim Anziehen von Spannschrauben derart deformieren und einebnen, dass beim Erreichen des Sollanzugsmomentes der Spannschrauben die Unterlegscheiben ihre endgültige Lage erreicht haben und keine weitere Absenkung der Scheiben mehr erfolgen kann. So wird optisch das Erreichen des Sollanzugsmomentes jeder Schraube an der Lage der jeweiligen Unterlegscheibe erkennbar. Darüber hinaus ist die sichtbar deformierte Geometrie ein Indiz für eine bereits erfolgte Anwendung.

Nach einer Weiterbildung des Losflansches sind an einer Innenseite der äusseren Durchgangsöffnungen in Umfangsrichtung verteilt angeordnete Klemmnasen angeordnet, so dass Spannschrauben klemmend in den Durchgangsöffnungen gehalten sind. Dies erleichtert insbesondere die vertikale Montage der Flanschverbindung. Diese Klemmnasen, wie auch die Nocken an der Innenseite des inneren Ringabschnitts, bestehen vorzugsweise aus einem elastischen Material, nämlich Kunststoff. Werden die Losflansche selbst aus Kunststoff gefertigt, so können die Nocken bzw. Klemmnasen einfach angeformt werden.

Weiterhin ist es Aufgabe der vorliegenden Erfindung, ein Verfahren zur Herstellung eines Losflansches für eine Rohrverbindung anzugeben, so dass auf herstellungstechnisch einfache Weise ein Flanschkörper mit einem langzeitstabilen Spannkraftvermögen geschaffen wird.

Zur Lösung dieser Aufgabe ist das erfindungsgemässe Verfahren in Verbindung mit dem Oberbegriff des Patentanspruchs 18 dadurch gekennzeichnet, dass gesondert zwei gleichartige ringförmige Flanschteile durch Spritzen oder Giessen unter Bildung einer radial nach innen weisenden Abflachung geformt werden und dass in einem zweiten Arbeitsschritt die Flanschteile unter Bildung einer durch die zueinandergekehrten Abflachungen erzeugten Nut in einem äusseren Ringabschnitt miteinander verbunden werden.

Der besondere Vorteil des erfindungsgemässen Verfahrens liegt in der Einfachheit der Herstellung. Es werden vorzugsweise gleichförmige Flanschhälften gesondert geformt und dann unter flächiger Anlage von Radialflächen eines äusseren Ringabschnittes miteinander verschweisst. Die Flanschteile bzw. Flanschhälften weisen somit eine einfache geometrische Form auf, so dass sie mit einem relativ hohen Durchsatz gefertigt werden können.

Nach einer bevorzugten Ausführungsform des erfindungsgemäs-sen Verfahrens werden die Formteile aus einem Kunststoffmaterial durch Spritzgiessen hergestellt, wobei die feste Verbindung derselben durch Verschweissen auf einfache Art hergestellt werden kann.

Ausführungsbeispiele der Erfindung werden nachfolgend anhand der Zeichnungen näher erläutert.

Es zeigen:
- Figur 1: eine Draufsicht auf ein erstes Flanschteil,
- Figur 2: einen Querschnitt durch das erste Flanschteil entlang der Linie II-II in Figur 1,
- Figur 3: eine Draufsicht auf ein zweites Flanschteil,
- Figur 4: einen Querschnitt durch einen durch das erste und zweite Flanschteil gebildeten Flanschkörper entlang der Linie II-II in Figur 1,

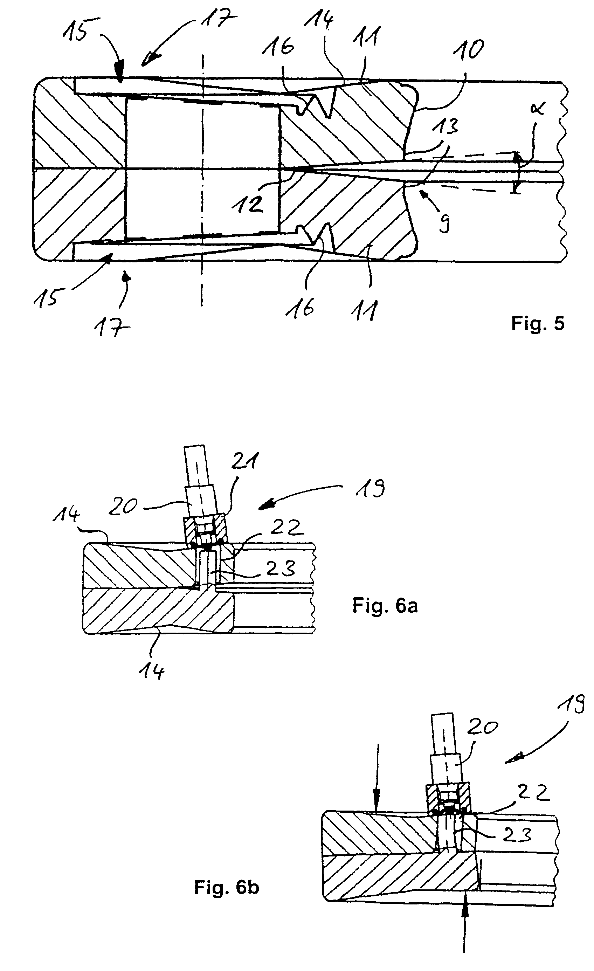

- Figur 5: einen vergrösserten Ausschnitt einer Einzelheit in Figur 4,
- Figur 6a: einen Teilquerschnitt eines mit einer Sensoreinrichtung versehenen Flanschkörpers in einer Entspannposition und
- Figur 6b: einen Teilquerschnitt des Flanschkörpers gemäss Figur 6a in einer Spannposition.

Der im folgenden beschriebene Losflansch dient zur Verbindung von nicht dargestellten Rohrenden mit jeweils einem Bund, die unmittelbar oder durch eine Dichtung getrennt flächig aneinanderliegen. Jedem Bund ist ein ringförmiger Losflansch zugeordnet, wobei der Innendurchmesser des Losflansches kleiner ist als der Aussendurchmesser des Bundes. Die beiden Losflansche sind koaxial zueinander ausgerichtet und werden durch Befestigungsmittel in axialer Richtung verspannt.

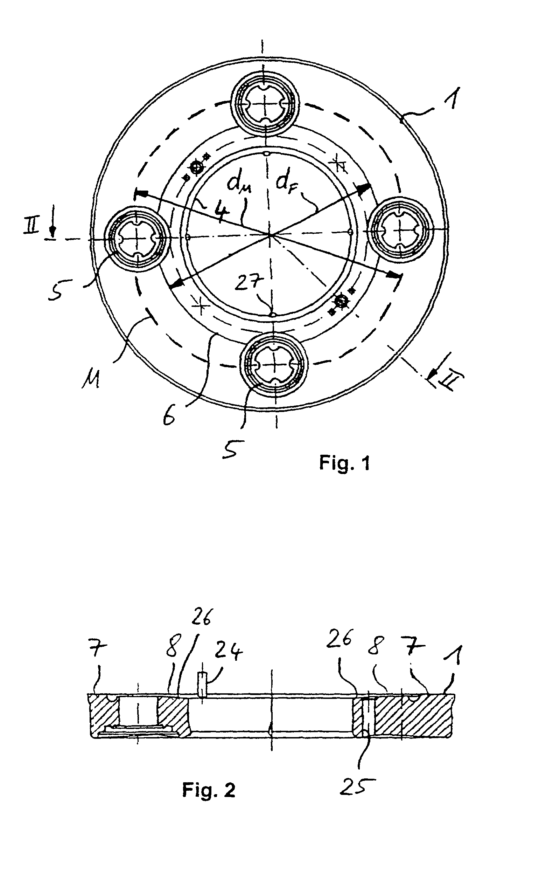

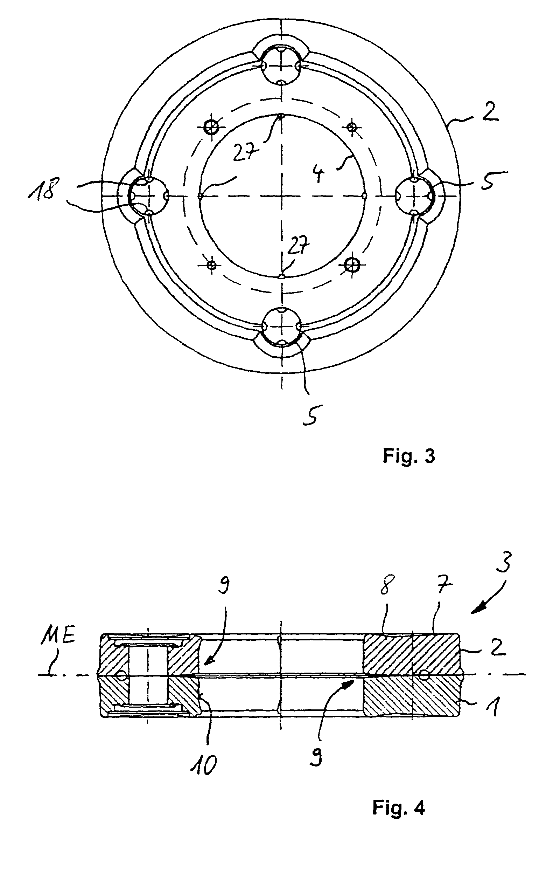

In Figur 1 ist ein erstes Flanschteil 1 dargestellt, das mit einem in Figur 3 dargestelltem zweiten Flanschteil 2 zu einem Flanschkörper 3 zusammengefügt wird. Der Flanschkörper 3 ist kreisringförmig ausgebildet und dient als Losflansch zur Anlage an den Bund. Eine zentrale Durchgangsöffnung 4 weist einen Durchmesser auf, der grösser ist als der Durchmesser der zu verbindenden Rohre einerseits und kleiner ist als der Aussendurchmesser des Bundes andererseits. Der Flanschkörper 3 weist in Umfangsrichtung verteilt angeordnete äussere Durchgangsöffnungen 5 auf, in die jeweils ein nicht dargestellter Schraubbolzen mit einem Kopf als Befestigungsmittel einsteckbar ist. Die Schraubbolzen werden durch die äusseren Durchgangsöffnungen 5 eines ersten Flanschkörpers 3 durchgesteckt und weisen eine solche Länge auf, dass das freie Ende des Schraubbolzens durch die korrespondierenden Durchgangsöffnung 5 des gleichen zweiten Flanschkörpers 3 eingreift. Nachfolgend kann der Schraubbolzen an dem freien Schaftende in Eingriff mit einer Mutter gebracht werden, so dass die jeweils an den Bunden angelegten Flanschkörper zueinander verspannt werden können.

Der Flanschkörper 3 weist einen äusseren Ringabschnitt 7 und einen inneren Ringabschnitt 8 auf, wobei die äusseren Durchgangsöffnungen 5 im wesentlichen im äusseren Ringabschnitt 7 angeordnet sind. In dem äusseren Ringabschnitt 7 sind die Flanschteile 1 und 2 fest miteinander verbunden. In dem radial nach innen benachbarten inneren Ringabschnitt 8 sind die Flanschteile 1 und 2 in einer entspannten Ausgangsposition beabstandet zueinander ausgebildet unter Bildung einer in Umfangsrichtung verlaufenden Nut 9. Die Nut 9 ist im Querschnitt V-förmig ausgebildet und erstreckt sich durchgehend an einer Innenseite 10 des Flanschkörpers 3 in Umfangsrichtung.

Alternativ kann die Nut 9 auch unterbrochen ausgebildet sein, wobei die Nut zumindest in einem Kreisausschnitt des Flanschkörpers 3 angeordnet ist, in dem keine äusseren Durchgangsöffnungen 5 angeordnet sind.

Durch die Ausbildung der Nut 9 bilden die Flanschteile 1, 2 in dem inneren Ringabschnitt 8 jeweils eine Schrägfläche 11, die elastisch verformbar ausgebildet ist. Die Nut 9 ist rotationssymmetrisch ausgebildet und weist einen Fussabschnitt 12 auf, der entlang eines Fusskreises 6 verläuft, wobei der Fusskreis 6 die äusseren Durchgangsöffnungen 5 schneidet. Alternativ kann der Fusskreis 6 auch einen geringeren Radius aufweisen, so dass er von den äusseren Durchgangsöffnungen 5 einen radialen Abstand aufweist. Die Grösse des Radius des Fusskreises 6 ist abhängig von der Materialeigenschaft des Flanschkörpers 3 bzw. des gewünschten Federungsverhaltens der Schrägfläche 11. Mit grösser werdendem Radius des Fusskreises 6 verringert sich das Federungsvermögen der Schrägfläche 11, was die Kompensation der Vorspannkraft beim Setzen der Flanschverbindung verringert.

Vorteilhaft ermöglicht die Erfindung, dass durch Vorgabe der Tiefe der Nut 9, der Dicke des Flanschkörpers 3 und seiner Materialeigenschaften eine vordefinierte Spannkraft der Schrägfläche 11 eingestellt werden kann, wobei die Schrägfläche 11 nach dem Zusammendrücken derselben in einer Spannposition des Flanschkörpers 3 nach Art einer Feder beim Setzen der Flanschverbindung einen wesentlichen Teil der Spannkraftverluste kompensiert.

Der Fusskreis 6 bildet zugleich eine Schwenkachse bzw. einen Schwenkkreis, um die bzw. den die Schrägfläche 11 verschwenkbar angeordnet ist. Die Nut 9 weist einen Öffnungswinkel α auf, der in einem Bereich zwischen 2° und 20° liegt. Vorzugsweise weist die Nut 9 einen Öffnungswinkel von 8° auf.
Ein Durchmesser d_{F} des Fusskreises 6 ist kleiner als ein Lochkreisdurchmesser d_{M} der Flanschteile 1, 2 bzw. des Flanschkörpers 3. Vorzugsweise ist der Durchmesser d_{F} um den Durchmesser der äusseren Durchtrittsöffnungen 5 kleiner ausgebildet als der Durchmesser d_{M}.

Die Flanschteile 1, 2 weisen die gleiche Dicke auf, so dass der Flanschkörper 3 bezüglich einer Mittelebene ME im wesentlichen symmetrisch ausgebildet ist.

Erfindungsgemäss kann die Nut 9 auch zur Signalisierung einer vorgegebenen Spannposition des Flanschkörpers 3 dienen. Die Breite und die Tiefe der Nut 9 kann auf ein vorgegebenes Anzugsdrehmoment abgestimmt sein, mittels dessen der Schraubbolzen in Eingriff mit der Mutter gebracht werden soll. Die vorgesehene Spannposition des Flanschkörpers 3 wird dem Monteur dadurch signalisiert, dass Randkanten 13 der gegenüberliegenden Schrägfläche 11 unmittelbar zur Anlage kommen.

Ein weiteres Kriterium, das alternativ oder zusätzlich angewendet werden kann zur Bestimmung des Erreichens der vorgesehenen Spannposition, erfolgt dadurch, dass eine äussere Radialfläche 14 der Schrägfläche 11 bereichsweise, vorzugsweise im Bereich einer Ausnehmung 15 für den Schraubenkopf bzw. die Mutter eine prismenförmige Oberflächenstruktur 16 aufweist. Die vorgesehene Spannposition wird erreicht, indem nach Anlage des Schraubenkopfes bzw. der Mutter in die die äussere Durchgangsöffnung 5 stirnseitig verbreiternde Ausnehmung 15 und Anlegen einer Spannkraft die prismenförmigen Erhebungen 16 derart plastisch verformt werden, dass eine ebene Radialfläche 14 gebildet wird. Die nunmehr erreichte Spannposition korrespondiert zu dem vorgegebenen Anzugsdrehmoment des Schraubbolzens.

Die Oberflächenstruktur 16 kann gleichmässig oder unregelmässig ausgebildet sein. Wesentlich ist, dass die so gebildeten Ausnehmungen im Durchschnitt ein Volumen ausfüllen, das dem Volumen der übrigen Radialbereichen 17 der Ausnehmung 15 entspricht. Die prismenförmige Oberflächenstruktur 16 ist vorzugsweise einem radial nach innen weisenden Radialbereich 17 der Ausnehmung 15 zugeordnet.

Die äusseren Radialflächen 14 sind im Ausgangszustand in radial nach innen weisender Richtung auseinanderlaufend ausgebildet, so dass nach Eingreifen des Spannbolzens und Verbringen desselben in die Spannposition der Kopf und die Mutter an den Radialflächen 14 unter koaxialer Orientierung unmittelbar anliegen.

Zur Erleichterung der Uberkopfmontage weisen die äusseren Durchgangsöffnungen 5 jeweils in einem Kantenbereich in Umfangsrichtung versetzt zueinander angeordnete Klemmnasen 18 auf, an denen der Schraubbolzen nach Einsetzen in die Durchgangsöffnung 5 klemmend gehalten ist.

Zum Erkennen einer nachlassenden Spannkraft nach dem Setzen der Flanschverbindung ist nach einer Ausführungsform des Losflansches eine Sensoreinrichtung 19 vorgesehen, die einen Drucksensor 20 aufweist, der in einer im wesentlichen axial von einer äusseren Radialfläche 14 der Schrägflächen 11 abragenden Aufnahme 21 gelagert ist. Die Aufnahme 21 ist vorzugsweise an die Radialfläche 14 der Schrägflächen 11 angeformt. Die die Aufnahme 21 aufweisende Schrägfläche 11 weist eine Durchgangsbohrung 22 auf, durch die ein einstückig mit den gegenüberliegenden Schrägflächen 11 verbundener Sensorbolzen 23 eingreifen kann. In Abhängigkeit von dem Öffnungswinkel der Schrägfläche 11 wird der Drucksensor 20 unter Anlage der Stirnfläche des Sensorbolzens 23 betätigt. Lässt die Spannkraft des Flanschkörpers 3 nach, was mit einer Spreizung der Schrägfläche 11 einhergeht, verschiebt sich der Sensorbolzen 23 um eine Wegstrecke. Überschreitet die sich ändernde Wegstrecke eine vorgegebene Sollänge, die ausserhalb des Toleranzbereiches liegt, wird in dem Drucksensor 20 ein Signal ausgelöst, das nach Auswertung in eine nicht dargestellte Auswerteeinheit zur Signalisierung einer ausserhalb des Toleranzbereiches liegenden Restdichtkraft dient.

Zur Herstellung des Flanschkörpers 3 werden die Flanschteile 1 und 2 gesondert als Kunststofformteile durch Spritzgiessen hergestellt. Die Flanschteile 1, 2 können aus einem thermoplastischen oder einem vorzugsweise glasfaserverstärkten duroplastischen Kunststoffmaterial bestehen. Alternativ können die Flanschteile 1 und 2 auch aus Metall, insbesondere Blech, bestehen.

In einem nachfolgendem Arbeitsschritt werden die beiden Flanschteile 1 und 2 durch Verschweissen in dem äusseren Ringabschnitt 7 fest miteinander verbunden. Zur zentrierten Positionierung der Flanschteile 1, 2 bzw. zur fluchtenden Anordnung der äusseren Durchgangsöffnungen 5 derselben weisen die Flanschteile 1, 2 in dem inneren Ringabschnitt 8 Zentrierungsbolzen 24 bzw. Zentrierungsbohrungen 25 auf, die in axialer Richtung verlaufen.

Zur Bildung der späteren Nut 9 weisen die Flanschteile 1, 2 jeweils in einem inneren Ringabschnitt 8 Abflachungen 26 auf. Dadurch, dass die Fianschteile 1, 2 gleichförmig ausgebildet sind, kann die Herstellung derselben mit einem einzigen Werkzeug erfolgen. Dies verringert die Herstellungskosten bzw. erhöht den Durchsatz.

Zur Erleichterung der Überkopfmontage weist die Innenseite 10 des inneren Ringabschnitts 8 in Umfangsrichtung verteilt angeordnete Nocken 27 auf, die radial nach innen abragen und zur klemmenden Halterung des Flanschkörpers 3 an einem Rohrende dienen.

## Patentansprüche

1. Losflansch zur Verbindung von Rohren an mit jeweils einem Bund versehenen gegenüberliegenden Rohrenden, mit einem ringförmigen Flanschkörper (3), der eine Mehrzahl von in Umfangsrichtung verteilt angeordneten äusseren Durchgangsöffnungen (5) für Befestigungsmittel aufweist, wobei der Flanschkörper (3) einen inneren Ringabschnitt (8) und einen äusseren Ringabschnitt (7) aufweist, **dadurch gekennzeichnet, dass** eine radial nach innen zugewandte Innenseite (10) des inneren Ringabschnitts (8) zumindest bereichsweise eine in Umfangsrichtung verlaufende Nut (9) mit einer vorgegebenen Tiefe aufweist.

2. Losflansch nach Anspruch 1, **dadurch gekennzeichnet, dass** die Nut (9) im Querschnitt V-förmig ausgebildet ist, wobei zueinander gekehrte Schrägflächen der Nut (9) in radialer Richtung nach innen auseinanderlaufend ausgebildet sind.

3. Losflansch nach Anspruch 1 oder 2, **dadurch gekennzeichnet, dass** ein Fussabschnitt (12) der Nut (9) zumindest in einem Bereich der äusseren Durchgangsöffnungen (5) bis an einen Mittelkreis (M) des Flanschkörpers (3) heranreicht.

4. Losflansch nach einem der Ansprüche 1 bis 3, **dadurch gekennzeichnet, dass** sich die Nut (9) durchgehend in Umfangsrichtung erstreckt.

5. Losflansch nach einem der Ansprüche 1 bis 4, **dadurch gekennzeichnet, dass** die Tiefe (12) der Nut (9) im Bereich der äusseren Durchgangsöffnungen (5) grösser ausgebildet ist als in den in Umfangsrichtung zwischen den äusseren Durchgangsöffnungen (5) liegenden Bereichen.

6. Losflansch nach einem der Ansprüche 1 bis 5, **dadurch gekennzeichnet, dass** der Öffnungswinkel (α) der Nut (9) in einem Bereich von 2° bis 20° liegt.

7. Losflansch nach einem der Ansprüche 1 bis 6, **dadurch gekennzeichnet, dass** sich die Nut (9) symmetrisch zu einer Mittelebene (ME) des Flanschkörpers (3) erstreckt.

8. Losflansch nach einem der Ansprüche 1 bis 7, **dadurch gekennzeichnet, dass** der Flanschkörper (3) durch zwei miteinander verbundene Flanschteile (1, 2) gebildet ist, die jeweils mindestens eine zueinander gekehrte Schrägfläche (11) zur Bildung der Nut (9) aufweisen.

9. Losflansch nach Anspruch 8, **dadurch gekennzeichnet, dass** die Schrägfläche (11) im Ausgangszustand derart geneigt zu der Mittelebene (ME) ausgebildet ist, dass bei Nennbelastung das Flanschteil (1, 2) flächig an dem Bund anliegt.

10. Losflansch nach einem der Ansprüche 1 bis 9, **dadurch gekennzeichnet, dass** die äusseren Durchgangsöffnungen (5) im wesentlichen in dem äusseren Ringabschnitt (7) angeordnet sind.

11. Losflansch nach einem der Ansprüche 8 bis 10, **dadurch gekennzeichnet, dass** von einer Schrägfläche (11) des Flanschteils (1, 2) ein in axialer Richtung verlaufender Sensorbolzen (23) abragt, der in einer Durchgangsbohrung (22) der gegenüberliegenden Schrägfläche (11) verschiebbar gelagert ist, und dass der Sensorbolzen (23) mit einem seitlich angebrachten Drucksensor (20) in Wirkverbindung bringbar ist.

12. Losflansch nach einem der Ansprüche 8 bis 11, **dadurch gekennzeichnet, dass** das Flanschteil (1, 2) zur Anlage eines Befestigungsmittels an einer Radialfläche (14) eine prismenförmige Oberflächenstruktur (16) aufweist, deren Tiefe derart auf das vorgegebene Anzugsdrehmoment des Befestigungsmittels abgestimmt ist, so dass bei Erreichen des Anzugsdrehmomentes die Oberflächenstruktur (16) eben verformt ist.

13. Losflansch nach einem der Ansprüche 8 bis 12, **dadurch gekennzeichnet, dass** die äussere Durchgangsöffnung (5) an mindestens einer Stirnseite eine verbreiterte Ausnehmung (15) aufweist zur Aufnahme eines Kopfes des Befestigungsmittels und dass der Abstand zwischen der radial nach innen weisenden Randkante der Ausnehmung (15) und der Innenseite (10) derart auf die Nut (9) abgestimmt ist, dass bei Erreichen der flächigen Anlage der zueinandergekehrten Schrägflächen (11) der Flanschteile (1, 2) das vorgegebene Anzugsdrehmoment des in Wirkverbindung stehenden Befestigungsmittels anliegt.

14. Losflansch nach Anspruch 13, **dadurch gekennzeichnet, dass** die Ausnehmung (15) in einem radial nach innen weisenden Abschnitt die prismenförmigen Oberflächenkontur (16) aufweist.

15. Losflansch nach einem der Ansprüche 1 bis 14, **dadurch gekennzeichnet, dass** an einer Innenseite (10) des inneren Ringabschnitts (8) in Umfangsrichtung verteilt und radial nach innen ragende Nocken (27) vorgesehen sind zur klemmenden Halterung des Losflansches an dem Rohrende.

16. Losflansch nach einem der Ansprüche 1 bis 15, **dadurch gekennzeichnet, dass** an einer Innenseite der äusseren Durchgangsöffnungen (5) in Umfangsrichtung verteilt angeordnete Klemmnasen (18) angeordnet sind zur klemmenden Halterung des Befestigungsmittels in der äusseren Durchgangsöffnung (5).

17. Verwendung des Losflansches nach einem der Ansprüche 8 bis 16 zur Anlage an ein Bund eines Rohrendes, wobei die Bunde von zueinandergekehrten Rohrenden mittels durch die äusseren Durchgangsöffnungen (5) eingreifenden Schraubbolzen unter Zusammenpressen der Flanschteile (1, 2) jeweils eines Flanschkörpers (3) zueinander hingedrückt werden.

18. Verfahren zur Herstellung eines Losflansches für eine Rohrverbindung, der eine Mehrzahl von in Umfangsrichtung verteilt angeordneten äusseren Durchgangsöffnungen (5) aufweist, **dadurch gekennzeichnet, dass** gesondert zwei gleichartige ringförmige Flanschteile (1, 2) durch Spritzen oder Giessen unter Bildung einer radial nach innen weisenden Abflachung (26) geformt werden und dass in einem zweiten Arbeitsschritt die Flanschteile (1, 2) unter Bildung einer durch die zueinandergekehrten Abflachungen (26) erzeugten Nut (9) in einem äusseren Ringabschnitt (7) miteinander verbunden werden.

19. Verfahren nach Anspruch 18, **dadurch gekennzeichnet, dass** die Flanschteile (1, 2) bereichsweise mit in axialer Richtung verlaufenden Zentrierungsbolzen (24) und/oder Zentrierungsbohrungen (25) geformt werden, so dass die Flanschteile (1, 2) bündig zueinander positioniert und dann miteinander verbunden werden.

20. Verfahren nach Anspruch 18 oder 19, **dadurch gekennzeichnet, dass** die Flanschteile (1, 2) aus einem Kunststoffmaterial gespritzt oder gepresst werden.

21. Verfahren nach einem der Ansprüche 18 bis 20, **dadurch gekennzeichnet, dass** die Flanschteile (1, 2) aus einem thermoplastischen oder einem glasfaserverstärktem duroplastischen Kunststoffmaterial gespritzt bzw. gepresst werden.

22. Verfahren nach einem der Ansprüche 18 oder 19, **dadurch gekennzeichnet, dass** die Flanschteile (1, 2) aus einem Blechmaterial hergestellt werden.

23. Verfahren nach einem der Anspruche 18 bis 22, **dadurch gekennzeichnet, dass** die Flanschteile (1, 2) miteinander verschweisst werden.

## Claims

1. Loose flange for connecting pipes at opposite pipe ends each provided with a collar, having an annular flange body (3) which has a plurality of circumferentially distributed outer through-passage openings (5) for fastening means, the flange body (3) having an inner ring section (8) and an outer ring section (7), **characterized in that** a radially inner side (10) of the inner ring section (8) has, at least in certain regions, a circumferentially running groove (9) of a predetermined depth.

2. Loose flange according to Claim 1, **characterized in that** the groove (9) is of cross-sectionally V-shaped design, mutually facing oblique surfaces of the groove (9) being designed such that they diverge in the radially inward direction.

3. Loose flange according to Claim 1 or 2, **characterized in that** a foot section (12) of the groove (9) extends as far as a centre circle (M) of the flange body (3) at least in a region of the outer through-passage openings (5).

4. Loose flange according to one of Claims 1 to 3, **characterized in that** the groove (9) extends continuously in the circumferential direction.

5. Loose flange according to one of Claims 1 to 4, **characterized in that** the depth (12) of the groove (9) is designed to be greater in the region of the outer through-passage openings (5) than in the regions located between the outer through-passage openings (5) in the circumferential direction.

6. Loose flange according to one of Claims 1 to 5, **characterized in that** the opening angle (α) of the groove (9) is located in a range of from 2° to 20°.

7. Loose flange according to one of Claims 1 to 6, **characterized in that** the groove (9) extends symmetrically to a centre plane (ME) of the flange body (3).

8. Loose flange according to one of Claims 1 to 7, **characterized in that** the flange body (3) is formed by two flange parts (1, 2) which are connected to one another and each have at least one oblique surface (11) for forming the groove (9), the two oblique surfaces being directed towards one another.

9. Loose flange according to Claim 8, **characterized in that** the oblique surface (11) is designed to be inclined in relation to the centre plane (ME) in the initial state such that, with nominal loading, the flange part (1, 2) comes into surface-area abutment with the collar.

10. Loose flange according to one of Claims 1 to 9, **characterized in that** the outer through-passage openings (5) are arranged essentially in the outer ring section (7).

11. Loose flange according to one of Claims 8 to 10, **characterized in that** projecting from an oblique surface (11) of the flange part (1, 2) is an axially running sensor bolt (23) which is mounted displaceably in a through-passage bore (22) of the opposite oblique surface (11), and **in that** the sensor bolt (23) can be brought into operative connection with a laterally provided pressure sensor (20).

12. Loose flange according to one of Claims 8 to 11, **characterized in that**, for abutment of a fastening means against a radial surface (14), the flange part (1, 2) has a prism-like surface structure (16), of which the depth is coordinated with the predetermined tightening torque of the fastening means, with the result that this surface structure (16) is deformed in a planar manner when the tightening torque is reached.

13. Loose flange according to one of Claims 8 to 12, **characterized in that**, on at least one end side, the outer through-passage opening (5) has a widened recess (15) for accommodating a head of the fastening means, and **in that** the distance between the radially inwardly oriented border edge of the recess (15) and the inner side (10) is coordinated with the groove (9) such that, when the surface-area abutment of the mutually facing oblique surfaces (11) of the flange parts (1, 2) is reached, the predetermined tightening torque of the operatively connected fastening means prevails.

14. Loose flange according to Claim 13, **characterized in that** the recess (15) has the prism-like surface contour (16) in a radially inwardly oriented section.

15. Loose flange according to one of Claims 1 to 14, **characterized in that** circumferentially distributed and radially inwardly projecting protuberances (27) are provided on an inner side (10) of the inner ring section (8) for securing the loose flange with a clamping action at the pipe end.

16. Loose flange according to one of Claims 1 to 15, **characterized in that** circumferentially distributed clamping noses (18) are arranged on an inner side of the outer through-passage openings (5) for securing the fastening means with clamping action in the outer through-passage opening (5).

17. Use of the loose flange according to one of Claims 8 to 16 for abutment against a collar of a pipe end, the collars of mutually facing pipe ends being pressed towards one another by means of bolts engaging through the outer through-passage openings (5), the flange parts (1, 2) of in each case one flange body (3) being pressed together in the process.

18. Method of producing a loose flange for a pipe connection, which has a plurality of circumferentially distributed outer through-passage openings (5), **characterized in that** two identical annular flange parts (1, 2) are formed separately by injection moulding or casting, with a radially inwardly oriented flattened portion (26) being formed in the process, and **in that**, in a second step, the flange parts (1, 2) are connected to one another in an outer ring section (7), with the groove (9) produced by the mutually facing flattened portions (26) being formed in the process.

19. Method according to Claim 18, **characterized in that** the flange parts (1, 2) are formed, in certain regions, with axially running central bolts (24) and/or central bores (25), with the result that the flange parts (1, 2) are positioned in a flush manner in relation to one another and are then connected to one another.

20. Method according to Claim 18 or 19, **characterized in that** the flange parts (1, 2) are injection moulded or pressed from a polymer material.

21. Method according to one of Claims 18 to 20, **characterized in that** the flange parts (1, 2) are injection moulded or pressed from a thermoplastic or a glass-fibre-reinforced thermoset polymer material.

22. Method according to one of Claims 18 or 19, **characterized in that** the flange parts (1, 2) are produced from a sheet-metal material.

23. Method according to one of Claims 18 to 22, **characterized in that** the flange parts (1, 2) are welded to one another.

## Revendications

1. Bride mobile de raccordement de tuyaux au niveau d'extrémités de tuyaux opposées, respectivement pourvues d'un collet, avec un corps de bride annulaire (3), qui présente une pluralité d'orifices de passage extérieurs (5), disposés de manière répartie dans le sens de la circonférence, pour des moyens de fixation, le corps de bride (3) présentant une section circulaire intérieure (8) et une section circulaire extérieure (7), **caractérisée en ce qu'**une face interne (10), tournée de manière radiale vers l'intérieur, de la section annulaire intérieure (8) présente au moins par zones une rainure (9) s'étendant dans le sens de la circonférence, avec une profondeur prescrite.

2. Bride mobile selon la revendication 1, **caractérisée en ce que** la rainure (9) est formée en V en coupe transversale, des surfaces obliques tournées l'une vers l'autre de la rainure (9) étant formées de manière divergente vers l'intérieur en direction radiale.

3. Bride mobile selon la revendication 1 ou 2, **caractérisée en ce qu'**une section de base (12) de la rainure (9) atteint, au moins dans une zone des orifices de passage extérieurs (5), un cercle médian (M) du corps de bride (3).

4. Bride mobile selon l'une des revendications 1 à 3, **caractérisée en ce que** la rainure (9) s'étend de bout en bout dans le sens de la circonférence.

5. Bride mobile selon l'une des revendications 1 à 4, **caractérisée en ce que** la profondeur (12) de la rainure (9) est conçue, dans la zone des orifices de passage extérieurs (5), de façon plus grande que dans les zones situées dans le sens de la circonférence entre les orifices de passage extérieurs (5).

6. Bride mobile selon l'une des revendications 1 à 5, **caractérisée en ce que** l'angle d'ouverture (α) de la rainure (9) se situe dans une plage de 2° à 20°.

7. Bride mobile selon l'une des revendications 1 à 6, **caractérisée en ce que** la rainure (9) s'étend de manière symétrique par rapport à un plan médian (ME) du corps de bride (3).

8. Bride mobile selon l'une des revendications 1 à 7, **caractérisée en ce que** le corps de bride (3) est formé par deux pièces de bride (1, 2) reliées ensemble, qui présentent respectivement au moins une surface oblique (11) tournée l'une vers l'autre pour former la rainure (9).

9. Bride mobile selon la revendication 8, **caractérisée en ce que** la surface oblique (11) est conçue, à l'état initial, avec une telle inclinaison par rapport au plan médian (ME) que, en cas de charge nominale, la pièce de bride (1, 2) jouxte le collet de manière plane.

10. Bride mobile selon l'une des revendications 1 à 9, **caractérisée en ce que** les orifices de passage extérieurs (5) sont essentiellement situés dans la section circulaire extérieure (7).

11. Bride mobile selon l'une des revendications 8 à 10, **caractérisée en ce que**, d'une surface oblique (11) de la pièce de bride (1, 2) dépasse un boulon capteur (23) s'étendant dans la direction axiale, qui est logé de manière coulissante dans un alésage de passage (22) de la surface oblique (11) opposée, et que le boulon capteur (23) peut être mis en liaison active avec un capteur de pression (20) monté latéralement.

12. Bride mobile selon l'une des revendications 8 à 11, **caractérisée en ce que** la pièce de bride (1, 2) présente, pour l'installation d'un moyen de fixation au niveau d'une surface radiale (14), une structure de surface (16) en forme de prisme dont la profondeur est adaptée au couple initial de démarrage prescrit du moyen de fixation de telle manière que, lorsque le couple initial de démarrage est atteint, la structure de surface (16) est façonnée de manière égale.

13. Bride mobile selon l'une des revendications 8 à 12, **caractérisée en ce que** l'orifice de passage extérieur (5) présente, au moins au niveau d'un côté frontal, un creux élargi (15) pour accueillir une tête du moyen de fixation et que l'intervalle entre l'arête périphérique, dirigée vers l'intérieur de manière radiale, du creux (15) et la face interne (10) est adapté à la rainure (9) de telle sorte que, lors de l'achèvement de l'installation plane des surfaces obliques (11), tournées l'une vers l'autre, des pièces de bride (1, 2), le couple initial de démarrage prescrit du moyen de fixation en liaison active est adjacent.

14. Bride mobile selon la revendication 13, **caractérisée en ce que** le creux (15) présente le profil de surface (16) en forme de prisme dans une section dirigée vers l'intérieur de manière radiale.

15. Bride mobile selon l'une des revendications 1 à 14, **caractérisée en ce que**, pour le fixage par pincement de la bride mobile au niveau de l'extrémité du tuyau, des cames (27), réparties dans le sens de la circonférence et dépassant vers l'intérieur de manière radiale, sont prévues au niveau d'une face interne (10) de la section annulaire intérieure (8).

16. Bride mobile selon l'une des revendications 1 à 15, **caractérisée en ce que**, pour le fixage par pincement du moyen de fixation dans l'orifice de passage extérieur (5), des taquets de serrage (18), répartis dans le sens de la circonférence, sont disposés au niveau d'une face interne des orifices de passage extérieurs (5).

17. Utilisation de la bride mobile selon l'une des revendications 8 à 16 pour l'installation au niveau d'un collet d'une extrémité de tuyau, les collets des extrémités de tuyaux tournées les unes vers les autres étant pressés les uns vers les autres au moyen de boulons filetés s'engrenant via les orifices de passage extérieurs (5) sous la pression conjointe des pièces de bride (1, 2) respectivement d'un corps de bride (3).

18. Procédé de fabrication d'une bride mobile pour un raccordement de tuyaux, qui présente une pluralité d'orifices de passage extérieurs (5) disposés de manière répartie dans le sens de la circonférence, **caractérisé en ce que** deux pièces de bride (1, 2) annulaires similaires sont moulées séparément par injection ou coulage en formant un aplatissement (26) dirigé vers l'intérieur de manière radiale et que, dans le cadre d'une deuxième étape de travail, les pièces de bride (1, 2) sont raccordées ensemble en formant une rainure (9), produite par les aplatissements (26) tournés l'un vers l'autre, dans une section annulaire extérieure (7).

19. Procédé selon la revendication 18, **caractérisé en ce que** les pièces de bride (1, 2) sont moulées par zones avec des boulons de centrage (24) et/ou des alésages de centrage (25), s'étendant de manière axiale, de manière à ce que les pièces de bride (1, 2) soient positionnées à fleur l'une de l'autre et soient ensuite raccordées ensemble.

20. Procédé selon la revendication 18 ou 19, **caractérisé en ce que** les pièces de bride (1, 2) sont injectées ou compressées à partir d'une matière synthétique.

21. Procédé selon l'une des revendications 18 à 20, **caractérisé en ce que** les pièces de bride (1, 2) sont injectées ou compressées à partir d'une matière synthétique thermoplastique ou thermodurcissable armée aux fibres de verre.

22. Procédé selon l'une des revendications 18 ou 19, **caractérisé en ce que** les pièces de bride (1, 2) sont fabriquées en tôle.

23. Procédé selon l'une des revendications 18 à 22, **caractérisé en ce que** les pièces de bride (1, 2) sont soudées ensemble.
